# EUROPEAN PATENT SPECIFICATION

(11) **EP 0 895 493 B1**
(45) Date of publication and mention of the grant of the patent: **02.01.2002**
(21) Application number: 97916662.6
(22) Date of filing: 14.04.1997
(51) Int. Cl.: B60J 7/16, E05F 15/12

(54) **LEVER MECHANISM FOR CONTROLLING A ROOF HATCH**
HEBEMECHANISMUS ZUR STEUERUNG EINER DACHLUKE
MECANISME A LEVIERS DESTINE A COMMANDER UNE TRAPPE D'ACCES

(30) Priority: 23.04.1996 NL 1002926
(43) Date of publication of application: 10.02.1999
(73) Proprietor: BOOMSMA PRODUKTIE B.V., 1351 AE Almere-Haven (NL)
(72) Inventor: WAGEMAN, Frans, NL-7558 TK Hengelo (NL); BOOR, Gijsbert, Wijnand, NL-1218 GA Hilversum (NL)
(74) Representative: Van Breda, Jacobus
(86) International application number: NL9700190
(87) International publication number: WO9739906

(56) References cited:
- EP-A- 0 249 268
- EP-A- 0 291 468
- DE-A- 3 119 103

## Description

The invention relates to a lever mechanism for controlling a roof hatch comprising a guide shaft and two levers, both of which are in the mounted state connected at one end to the roof hatch and at the other end movably connected to the guide shaft, and further comprising distance means which are coupled to coupling points of the levers, which coupling points are located between the extremities of the levers for the maintenance of a permanent distance of the coupling points of the levers with respect to the support positions near the guide shaft.

Such a lever mechanism is known from the European patent specification 0 325 380, according to which patent specification plastic, or at least flexible materials, are used for the lever mechanism. The guide shaft described in this patent specification takes the form of a threaded rod having two halves which, with respect to each other, have opposite threads. The levers are provided with spacers which are connected with the threaded rod in mirror image. The prior art spacer is formed as auxiliary arm having half the length of the lever and being connected to the lever at its middle. From the closed position of the roof hatch, rotation of the threaded rod makes the ends of the lever which are connected to the threaded rod move apart such that as a consequence, by engaging the auxiliary arms, the ends coupled to the roof hatch make a true vertical movement upward.

There are important disadvantages attached to this prior art. For instance, the construction of the levers engaging the auxiliary arms, as described in EP 0 325 380, are somewhat rickety because these levers and arms can move in relation to each other in a direction other than the plane of intermating. Such a rickety construction is particularly disadvantageous when the construction is applied with roof hatches for vehicles such as busses. Another disadvantage of this known construction is the fact that in the closed position, much momentum must be exerted on the threaded rod to move the levers from their starting position upward. This disadvantage may be of particular importance if the threaded rod is driven by an electromotor, because an immediate consequence of choosing a larger torque is that a larger electromotor has to be used and thus is also an unfavourable consequence for the overall height of the roof hatch. The latter is of importance as there is a continuous effort to limit the overall height of the roof hatch. Yet another disadvantage of the prior art is to be found in the fact that the desire to have the roof hatch open and close with a true vertical movement, results in being forced to apply the above-described sizing and assembly of levers and auxiliary arms so that there is therefore no room for free design. It is now the object of the invention to remove these disadvantages and to achieve advantages which will be explained below.

The lever mechanism according to the invention is characterized, in that the distance means are executed as guide slots, and that between its extremities each lever is provided with a coupling element for engaging a guide slot such that when a lever is moved along the guide shaft, that end of the lever which is coupled to the roof hatch will run along a trajectory of movement determined by the guide slot. For one thing, this construction guarantees complete freedom of design with respect to the speed and direction of opening of the roof hatch when operating the lever mechanism. For another thing, this construction permits a saving with respect to the lever mechanism of the prior art because, instead of requiring the auxiliary arms, which are omitted, one or two permanently placed guide plates suffice. This makes the construction simpler and moreover more reliable. In addition, the lever mechanism in accordance with the invention is constructed to be more rigid, which effectively prevents the levers from wobbling. In view of this simple construction, it can also be manufactured more cheaply.

It is advantageous if the form of the guide slot is adapted and chosen subject to the maximum momentum that is desirably required to operate the roof hatch. Thanks to the considerable freedom of design afforded by the invention, it is now possible to design the lever mechanism such that a motor of a lower drive torque and therefore less costly suffices. Moreover, such a motor usually has a smaller diameter so that at the same time the overall height of the roof hatch is reduced.

This advantage with the lever mechanism according to the invention becomes particularly apparent when the guide shaft is a threaded rod driven by a motor and when the guide slot, in the portion where the roof hatch is slightly opened or nearly closed, has a flatter trend than elsewhere, so that when the threaded rod rotates while the coupling element is in the portion of the guide slot with the flatter trend, the roof hatch moves less than proportional compared with when the coupling element is not in the portion with said flatter trend.

A further possible embodiment of the lever mechanism according to the invention is characterized, in that the guide slot has substantially the form of a circle segment, and that the coupling element of the lever coupled to the guide slot is located in the middle, between the two extremities of the lever.

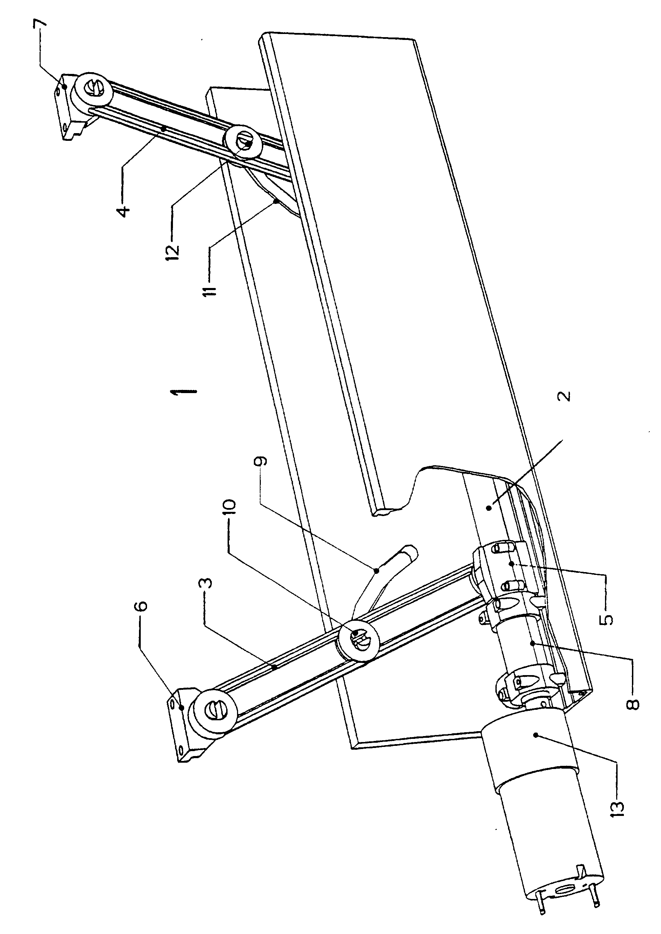

The invention will now be elucidated with reference to the drawing of one single Figure showing the lever mechanism according to the invention without connection to the roof hatch.

The lever mechanism 1 for a roof hatch comprises a guide shaft 2 and two levers 3,4. The lever 3, is shown to be movably connected to the guide shaft 2. Lever 4 is, of course, similarly constructed. The other end 6 of the lever 3 as well as the end 7 of the lever 4 are for coupling to a roof hatch (not shown). The lever mechanism 1 further comprises distance means 9,11 for the levers 3,4 in the form of a permanently placed side plate provided with slots. The levers 3,4 are movably coupled to the permanent side plate by means of the coupling elements 10,12. When the end 5 of the lever 3 is moved along the guide slot 2, the coupling element 10 will move in the guide slot 9 of the side plate such, that the guide slot 9 determines the movement carried out by the end 6 of the lever 3. By suitably choosing the place for mounting the coupling element 10 on the lever 3 and selecting the form given to the slot 9, it is possible to vary both the trueness of the vertical movement carried out by the end 6 of the lever 3, and the speed of this movement at a uniform movement of the end 5 over the guide shaft 2. On that score the invention provides a lever mechanism enjoying complete freedom of design. The guide shaft 2 may, for instance, be a threaded rod to which, for instance, a driving motor 13 is coupled for the rotation of the threaded rod. Of course, the end 5 of the lever 3 must then be provided with a corresponding thread to effectuate the movement of end 5 along the threaded rod 2 when the same is rotated.

Not shown in the Figure, but a possible advantageous embodiment of the lever mechanism 1 according to the invention, is the embodiment in which the form of the guide slots 9 and 11 in the portion corresponding with a slightly opened or nearly closed roof hatch, that is to say the portion of the guide slot 9,11 near the guide shaft or threaded rod 2, having a relatively flatter trend than elsewhere, so that on rotation of the threaded rod 2 while the coupling element 10,12 is in the portion of the guide slot 9,11 with the flatter trend, the roof hatch moves less than proportional compared with when the coupling element 10,12 is not in the part with the flatter trend. In that part the required drive torque which is to be supplied by the drive motor 13, is also reduced.

Another embodiment of the lever mechanism 1 according to the invention other than the one latterly discussed, is shown in the Figure. In this preferred embodiment the guide slot 9,11 has substantially the form of a circle segment, and the coupling element 10,12 of the lever 3,4 coupled to the guide slot 9,11 is located in the middle, between the two extremities of the lever 3,4.

The construction of lever 4 is executed analogously to that of lever 3 as discussed above. The Figure shows an embodiment in which the levers 3,4 and the distance means 9,11 engaging them are arranged in mirror image. This arrangement may also be changed such that both levers 3,4 and the engaging distance means 9,11 have the same orientation as the guide shaft 2, while maintaining all the advantages of the invention. By suitably choosing the place where the coupling elements 10,12 are mounted on the levers 3,4, and the form of the guide slots 9,11, this arrangement also allows a true vertical movement of the ends 6,7 of the levers 3,4 when operating the lever mechanism 1, so that the roof hatch can be opened and closed in the desired manner.

## Claims

1. A lever mechanism (1) for controlling a roof hatch comprising a guide shaft (2) and two levers (3,4), both of which are in the mounted state connected at one end to the roof hatch and at the other end movably connected to the guide shaft (2), and further comprising distance means (9,11) which are coupled to coupling points (10,12) of the levers (3,4), which coupling points are located between the extremities of the levers for the maintenance of a permanent distance of the coupling points (10,12) of the levers (3,4) with respect to the support positions near the guide shaft (2), **characterized in that** the distance means (9,11) are executed as guide slots (9,11), and that between its extremities each lever (3,4) is provided with a coupling element (10,12) for engaging a guide slot (9,11) such that when a lever (3,4) is moved along the guide shaft (2), that end (6,7) of the lever (3,4) which is coupled to the roof hatch will run along a trajectory of movement determined by the guide slot (9,11).

2. A lever mechanism according to claim 1, **characterized in that** the form of the guide slot (9,11) is adapted and chosen subject to the maximum momentum that is desirably required to operate the roof hatch.

3. A lever mechanism according to claim 1 or 2, wherein the guide shaft is a threaded rod (2) driven by a motor, **characterized in that** the guide slot (9,11), in the portion where the roof hatch is slightly opened or nearly closed, has a flatter trend than elsewhere, so that when the threaded rod (2) rotates while the coupling element (10,12) is in the portion of the guide slot (9,11) with the flatter trend, the roof hatch moves less than proportional compared with when the coupling element (10,12) is not in the portion with said flatter trend.

4. A lever mechanism according to claim 1 or 2, **characterized in that** the guide (9,11) slot has substantially the form of a circle segment, and that the coupling element (10,12) of the lever (3,4) coupled to the guide slot (9,11) is located in the middle, between the two extremities of the lever (3,4).

## Patentansprüche

1. Ein Hebelmechanismus (1) zum Steuern einer Dachluke, der eine Führungswelle (2) und zwei Hebel (3, 4) aufweist, wobei beide Hebel in dem angebrachten Zustand an einem Ende mit der Dachluke und an dem anderen Ende bewegbar mit der Führungswelle (2) verbunden sind, und der ferner Abstandseinrichtungen (9, 11) aufweist, die mit Kopplungspunkten (10, 12) der Hebel (3, 4) gekoppelt sind, wobei die Kopplungspunkte sich zwischen den Endpunkten der Hebel zur Beibehaltung eines permanenten Abstands der Kopplungspunkte (10, 12) der Hebel (3, 4) bezüglich der Unterstützungspositionen nahe der Führungswelle (2) befinden, **dadurch gekennzeichnet, daß** die Abstandseinrichtungen (9, 11) als Führungsschlitze (9, 11) ausgeführt sind, und daß jeder Hebel (3, 4) zwischen seinen Endpunkten derart mit einem Kopplungselement (10, 12) zum Ineingriffbringen mit einem Führungsschlitz (9, 11) versehen ist, daß, wenn ein Hebel (3, 4) entlang der Führungswelle (2) bewegt wird, dieses Ende (6, 7) des Hebels (3, 4), das mit der Dachluke gekoppelt ist, entlang einer Bewegungsbahn laufen wird, die durch den Führungsschlitz (9, 11) bestimmt ist.

2. Ein Hebelmechanismus gemäß Anspruch 1, **dadurch gekennzeichnet, daß** die Form des Führungsschlitzes (9, 11) abhängig von dem maximalen Moment angepaßt und ausgewählt ist, das erwünschterweise erforderlich ist, um die Dachluke zu betreiben.

3. Ein Hebelmechanismus gemäß Anspruch 1 oder 2, bei dem die Führungswelle ein mit einem Gewinde versehener Stab (2) ist, der von einem Motor angetrieben wird, **dadurch gekennzeichnet, daß** der Führungsschlitz (9, 11) bei dem Abschnitt, bei dem die Dachluke etwas geöffnet oder annähernd geschlossen ist, eine flachere Neigung als anderswo aufweist, so daß sich, wenn der mit einem Gewinde versehene Stab (2) sich dreht, während das Kopplungselement (10, 12) in dem Abschnitt des Führungsschlitzes (9, 11) mit der flacheren Neigung ist, die Dachluke weniger als proportional verglichen mit dem Fall, daß das Kopplungselement (10, 12) nicht in dem Abschnitt mit der flacheren Neigung ist, bewegt.

4. Ein Hebelmechanismus gemäß Anspruch 1 oder 2, **dadurch gekennzeichnet, daß** der Führungsschlitz (9, 11) im wesentlichen die Form eines Kreissegments aufweist, und daß das Kopplungselement (10, 12) des Hebels (3, 4), der mit dem Führungsschlitz (9, 11) gekoppelt ist, sich in der Mitte zwischen den beiden Endpunkten des Hebels (3, 4) befindet.

## Revendications

1. Mécanisme (1) à leviers pour la commande d'une trappe de toit comportant une barre de guidage (2) et deux leviers (3, 4) qui sont tous deux, dans l'état monté, reliés par une extrémité à la trappe de toit et par l'autre extrémité, de façon mobile, à la barre de guidage (2), et comportant en outre des moyens d'écartement (9, 11) qui sont couplés à des points d'accouplement (10, 12) des leviers (3, 4), lesquels points d'accouplement sont situés entre les extrémités des leviers pour le maintien d'une distance permanente des points d'accouplement (10,12) des leviers (3, 4) par rapport aux positions de support proches de la barre de guidage (2), **caractérisé en ce que** les moyens d'écartement (9, 11) sont réalisés sous la forme de fentes de guidage (9, 11), et **en ce que**, entre ses extrémités, chaque levier (3, 4) est pourvu d'un élément d'accouplement (10, 12) destiné à s'engager dans une fente de guidage (9, 11) de manière que, lorsqu'un levier (3, 4) est déplacé le long de la barre de guidage (2), l'extrémité (6, 7) du levier (3, 4) qui est accouplée à la trappe de toit se déplace le long d'une trajectoire de mouvement déterminée par la fente de guidage (9, 11).

2. Mécanisme à leviers selon la revendication 1, **caractérisé en ce que** la forme de la fente de guidage (9, 11) est adaptée et choisie en fonction de la force vive maximale qui est demandée de façon souhaitable pour manoeuvrer la trappe de toit.

3. Mécanisme à leviers selon la revendication 1 ou 2, dans lequel la barre de guidage est une tige filetée (2) entraînée par un moteur, **caractérisé en ce que** la fente de guidage (9, 11), dans la partie où la trappe de toit est légèrement ouverte ou presque fermée, présente une allure plus plate qu'ailleurs, en sorte que, lorsque la tige filetée (2) tourne, tandis que l'élément d'accouplement (10, 12) est dans la partie de la fente de guidage (9, 11) d'allure plus plate, la trappe de toit se déplace moins, proportionnellement, que lorsque l'élément d'accouplement (10, 12) ne se trouve pas dans la partie ayant ladite allure plus plate.

4. Mécanisme à leviers selon la revendication 1 ou 2, **caractérisé en ce que** la fente de guidage (9, 11) présente sensiblement la forme d'un segment de cercle, et **en ce que** l'élément d'accouplement (10, 12) du levier (3, 4) accouplé à la fente de guidage (9, 11) est placé dans le milieu, entre les deux extrémités du levier (3, 4).
